# EUROPEAN PATENT APPLICATION

(11) **EP 4 357 416 A1**
(43) Date of publication of application: **24.04.2024**
(21) Application number: 22824769.8
(22) Date of filing: 26.05.2022
(51) Int. Cl.: C08L 33/12, C08K 3/013, C08K 3/22, C08L 69/00

(54) **ACRYLIC RESIN COMPOSITION AND MOLDED ARTICLE**

(30) Priority: 18.06.2021 JP 2021101893
(71) Applicant: Panasonic Intellectual Property Management Co., Ltd., Osaka-shi, Osaka 540-6207 (JP)
(72) Inventor: KUBO, Kosuke, Kadoma-shi, Osaka 571-0057 (JP); WATANABE, Kouiti, Kadoma-shi, Osaka 571-0057 (JP); FUKUI, Kenichiro, Kadoma-shi, Osaka 571-0057 (JP); SAKAMOTO, Kenji, Kadoma-shi, Osaka 571-0057 (JP); SAWADA, Hiroshi, Kadoma-shi, Osaka 571-0057 (JP)
(74) Representative: Müller-Boré & Partner Patentanwälte PartG mbB
(86) International application number: PCT/JP2022/021621
(87) International publication number: WO 2022/264775

(57) **Abstract**

An acrylic resin composition is provided which readily improves mechanical performance, and readily enhances flame retardancy, of a molded material. The acrylic resin composition contains a thermoplastic resin (A), a halogen-based flame retarder (B), and an inorganic compound (C). The thermoplastic resin (A) includes a polymethyl methacrylate resin (A1) and a polycarbonate resin (A2). A mass proportion of the polycarbonate resin (A2) relative to a total amount of the polymethyl methacrylate resin (A1) and the polycarbonate resin (A2) is greater than or equal to 20% by mass and less than or equal to 50% by mass. An amount of halogen contained in the halogen-based flame retarder (B) relative to 100 parts by mass of the thermoplastic resin (A) is greater than or equal to 7 parts by mass and less than or equal to 21 parts by mass.

## Description

### Technical Field

The present disclosure relates to acrylic resin compositions and molded articles and specifically relates to an acrylic resin composition having flame retardancy and a molded article including a molded material of the acrylic resin composition.

### Background Art

Patent Literature 1 discloses, for example, a (meth)acrylic resin composition containing a (meth)acrylic polymer (P), a halogen-containing phosphorus flame retarder (C), an inorganic pigment (D), and a non-halogen-containing ester phosphate (E). It is disclosed in Patent Literature 1 that in the acrylic resin composition, the contained amount of halogen-containing phosphorus flame retarder (C) is greater than or equal to 5.0 parts by mass and less than or equal to 35 parts by mass relative to 100 parts by mass of the (meth)acrylic polymer (P), and the contained amount of the non-halogen-containing ester phosphate (E) is greater than or equal to 0.005 parts by mass and less than or equal to 0.15 parts by mass relative to 100 parts by mass of the (meth)acrylic polymer (P). It is disclosed in Patent Literature 1 that this acrylic resin composition is usable as a signboard·illumination material.

### Citation List

### Patent Literature

Patent Literature 1: JP 2018-154763 A

### Summary of Invention

An acrylic resin composition according to an aspect of the present disclosure contains a thermoplastic resin (A), a halogen-based flame retarder (B), and an inorganic compound (C). The thermoplastic resin (A) includes a polymethyl methacrylate resin (A1) and a polycarbonate resin (A2). A mass proportion of the polycarbonate resin (A2) relative to a total amount of the polymethyl methacrylate resin (A1) and the polycarbonate resin (A2) is greater than or equal to 20% by mass and less than or equal to 50% by mass. An amount of halogen contained in the halogen-based flame retarder (B) relative to 100 parts by mass of the thermoplastic resin (A) is greater than or equal to 7 parts by mass and less than or equal to 21 parts by mass.

A molded article according to an aspect of the present disclosure includes a molded material of the acrylic resin composition.

### Description of Embodiments

### 1. Overview

An embodiment of the present disclosure will be described below. Note that the embodiment described below is a mere example of various embodiments of the present disclosure. The embodiment described below may be variously modified depending on design as long as an object of the present disclosure is achieved.

First, how the acrylic resin composition of the present disclosure has been accomplished is described.

Conventionally, acrylic resin compositions are, for example, molded and processed to produce molded articles. For example, the acrylic resin composition of the Patent Literature 1 can be expected to improve the flame retardancy but has the problem of readily reducing mechanical performance, such as mechanical strength and hardness, of the molded article. Therefore, the inventors intensively studied to obtain an acrylic resin composition and a molded article which readily improve mechanical performance and enhance flame retardancy of a molded material. As a result, the inventors found the configuration of an acrylic resin composition of the present disclosure.

That is, the acrylic resin composition of the present embodiment contains a thermoplastic resin (A), a halogen-based flame retarder (B), and an inorganic compound (C). The thermoplastic resin (A) includes a polymethyl methacrylate resin (A1) and a polycarbonate resin (A2). A mass proportion of the polycarbonate resin (A2) relative to a total amount of the polymethyl methacrylate resin (A1) and the polycarbonate resin (A2) is greater than or equal to 20% by mass and less than or equal to 50% by mass. An amount of halogen contained in the halogen-based flame retarder (B) relative to 100 parts by mass of the thermoplastic resin (A) is greater than or equal to 7 parts by mass and less than or equal to 21 parts by mass. Thus, the acrylic resin composition of the present embodiment readily improves the mechanical performance, such as bending strength and pencil hardness and readily enhances the flame retardancy of the molded material.

The reason why the acrylic resin composition of the present embodiment achieves the above-described performance has not been exactly clear but is presumably as follows. Note that the present embodiment is not bound by the reason explained below.

That is, the thermoplastic resin (A) in the acrylic resin composition includes the polymethyl methacrylate resin (A1) and the polycarbonate resin (A2), and the mass proportion of the polycarbonate resin (A2) relative to the total amount of the polymethyl methacrylate resin (A1) and the polycarbonate resin (A2) is greater than or equal to 20% by mass and less than or equal to 50% by mass, thereby imparting high mechanical performance to a molded material made of the acrylic resin composition, and when the halogen-based flame retarder (B) is further contained, excellent flame retardancy can also be imparted to the molded material. Moreover, the acrylic resin composition contains the halogen-based flame retarder (B), and the amount of halogen contained in the halogen-based flame retarder (B) relative to 100 parts by mass of the thermoplastic resin (A) is greater than or equal to 7 parts by mass and less than or equal to 21 parts by mass, thereby imparting high flame retardancy to the molded material made of the acrylic resin composition. In particular, in the present embodiment, although the acrylic resin composition contains a flame retarder, adjusting the amount of halogen contained in the halogen-based flame retarder (B) enables high flame retardancy to be imparted to the molded material while the high mechanical performance provided by the thermoplastic resin (A) is maintained.

The acrylic resin composition of the present embodiment enables the high mechanical performance and the high flame retardancy to be imparted to the molded material made of the acrylic resin composition as described above and is thus suitably usable to produce molded articles having excellent physical properties.

### 2. Details

The acrylic resin composition and the molded article according to the present embodiment will be described in sequence in further detail below. Note that in the present disclosure, the expression "A and/or B" means "A", "B", or "A and B". Moreover, as used in the present disclosure, "(meth)acryl" means at least one of "acryl" or "methacryl". For example, (meth)acrylate means at least one of acrylate or methacrylate.

### (1) Acrylic Resin Composition

The acrylic resin composition of the present embodiment contains the thermoplastic resin (A), the halogen-based flame retarder (B), and the inorganic compound (C) as described above. Components which may be contained in the acrylic resin composition will be described.

### [Thermoplastic Resin]

The thermoplastic resin (A) can impart moldability to the acrylic resin composition. In the present embodiment, the thermoplastic resin (A) includes the polymethyl methacrylate resin (A1) and the polycarbonate resin (A2). Note that in the present disclosure, the "polymethyl methacrylate resin" may in some cases be referred to as a "PMMA resin", and the "polycarbonate resin" may in some cases be referred to as a "PC resin". PMMA is an abbreviation for polymethylmethacrylate, and PC is an abbreviation for polycarbonate.

The thermoplastic resin (A) contains the PMMA resin (A1), thereby readily imparting transparency and chemical resistance to the molded material of the acrylic resin composition. In the present embodiment, the content proportion of the PMMA resin (A1) relative to the total of the thermoplastic resin (A) is preferably greater than or equal to 50% by mass. In this case, more excellent transparency and chemical resistance can be imparted to the molded material made of the acrylic resin composition, and the mechanical strength of the molded material can also be increased. The content proportion of the PMMA resin (A1) relative to the total of the thermoplastic resin (A) is more preferably greater than or equal to 60% by mass, and much more preferably greater than or equal to 67% by mass. Note that a main component in the thermoplastic resin (A) is the largest amount of component of a plurality of components included in the thermoplastic resin (A).

Moreover, in the present embodiment, the thermoplastic resin (A) includes the PC resin (A2), thereby contributing to a further improvement in the mechanical strength of the molded material of the acrylic resin composition. Conventionally, for imparting flame retardancy by blending a flame retarder into a molded material of a resin composition containing a PMMA resin, the proportion of the flame retarder has to be increased, which may also impair physical properties (e.g., transparency, chemical resistance, and strength) derived from the PMMA resin. In contrast, in the present embodiment, the acrylic resin composition contains the PC resin (A2), thereby enhancing the flame retardancy also when the proportion of the flame retarder blended is relatively small, making the physical properties, such as the transparency and the chemical resistance, of the molded material of the acrylic resin composition to be less likely to be impaired, and further improving the mechanical performance.

In the present embodiment, in the acrylic resin composition, the mass proportion of the PC resin (A2) relative to the total amount of the PMMA resin (A1) and the PC resin (A2) is greater than or equal to 20% by mass and less than or equal to 50% by mass. Thus, the acrylic resin composition of the present embodiment enables the improved mechanical performance and the enhanced flame retardancy of the molded material to be maintained. The mass proportion of the PC resin (A2) relative to the total amount of the PMMA resin (A1) and the PC resin (A2) is more preferably greater than or equal to 25% by mass and less than or equal to 45% by mass, and much more preferably greater than or equal to 30% by mass and less than or equal to 40% by mass.

The thermoplastic resin (A) may include a thermoplastic component other than the PMMA resin (A1) and the PC resin (A2). Examples of the thermoplastic component other than the PMMA resin (A1) and the PC resin (A2) include a polyester resin, a polyethylene resin, a polypropylene resin, and a polystyrene resin. The content proportion of the thermoplastic component other than the PMMA resin (A1) and the PC resin (A2) in the thermoplastic resin (A) is, for example, greater than or equal to 1% by mass and less than or equal to 10% by mass.

### [Halogen-Based Flame Retarder]

The halogen-based flame retarder (B) can impart the flame retardancy to the acrylic resin composition and the molded material of the acrylic resin composition. In the present embodiment, the amount of halogen contained in the halogen-based flame retarder (B) relative to 100 parts by mass of the thermoplastic resin (A) is greater than or equal to 7 parts by mass and less than or equal to 21 parts by mass. Thus, the acrylic resin composition has, and can maintain, high flame retardancy. The amount of halogen contained in the halogen-based flame retarder (B) relative to 100 parts by mass of the thermoplastic resin (A) is more preferably greater than or equal to 10 parts by mass and less than or equal to 20 parts by mass, and much more preferably greater than or equal to 13 parts by mass and less than or equal to 17 parts by mass. In the present disclosure, "the amount of halogen contained in the halogen-based flame retarder (B) relative to 100 parts by mass of the thermoplastic resin (A)" is the percentage of a value obtained by multiplying the total contained amount of the halogen-based flame retarder (B) by the content of the halogen in the halogen-based flame retarder (B) relative to the mass of the thermoplastic resin (A).

The halogen-based flame retarder (B) preferably includes one or more halogen atoms and a bisphenol skeleton per molecule. In this case, the flame retardancy can be readily imparted to the molded material made of the acrylic resin composition.

Specific examples of the halogen-based flame retarder (B) include tetrabromobisphenol A (TBBPA), derivatives of the TBBPA, hexabromocyclododecane, ethylene bis(pentabromophenyl) (EBPBP), and derivatives of the EBPBP. Note that the halogen-based flame retarder (B) is not limited to the components described above.

Moreover, the acrylic resin composition may contain a flame-retarding component other than the halogen-based flame retarder (B) without departing from the scope of the present disclosure. Examples of the flame-retarding component other than the halogen-based flame retarder (B) include a phosphorus-containing flame retarder and a non-phosphorus-containing flame retarder.

### [Inorganic Compound]

The inorganic compound (C) can further improve the effect of imparting the flame retardancy to the acrylic resin composition and the molded material of the acrylic resin composition by the halogen-based flame retarder (B).

The inorganic compound (C) preferably includes one of, or both, diantimony trioxide and zinc stannate. The total amount of the diantimony trioxide and the zinc stannate relative to 100 parts by mass of the thermoplastic resin (A) is preferably greater than or equal to 0.1 parts by mass and less than or equal to 15 parts by mass. In this case, further enhanced flame retardancy can be imparted to the molded material of the acrylic resin composition. Note that in the present disclosure, the diantimony trioxide and the zinc stannate contained in the inorganic compound (C) function as a flame retarder auxiliary agent. Moreover, the inorganic compound (C) may include a flame retarder auxiliary agent other than the diantimony trioxide and the zinc stannate .

The inorganic compound (C) preferably further contains an inorganic filler (C1). In this case, the dispersibility of the acrylic resin composition can be readily improved. This can readily improve the moldability when the acrylic resin composition is molded. Moreover, dripping during combustion is hardly caused, thereby enhancing the flame retardancy. Note that in the present disclosure, the diantimony trioxide and the zinc stannate are distinguished from the inorganic filler (C1), that is, are not include in the inorganic filler (C1).

When the inorganic compound (C) contains the inorganic filler (C1), the shape of the inorganic filler (C1) may be a particle shape or a fiber shape. That is, the inorganic filler (C1) preferably includes at least one of an inorganic fiber (C11) or inorganic particles (C12). The inorganic fiber (C11) preferably has a fiber length of greater than or equal to 6 µm and less than or equal to 200 µm and a fiber diameter of greater than or equal to 6 µm and less than or equal to 13 µm. Moreover, the inorganic particles (C12) also preferably have an average particle size of greater than or equal to 6 µm and less than or equal to 13 µm. In this case, the flowability of the acrylic resin composition can be readily improved. This readily further improves the moldability during molding of the acrylic resin composition. The inorganic fiber (C11) more preferably has a fiber length of greater than or equal to 30 µm and less than or equal to 150 µm and a fiber diameter of greater than or equal to 7 µm and less than or equal to 12 µm, and much more preferably has a fiber length of greater than or equal to 50 µm and less than or equal to 100 µm and a fiber diameter of greater than or equal to 7 µm and less than or equal to 10 µm. Moreover, the average particle size of the inorganic particles (C12) is an accumulative 50% size (median size D50) calculated from a particle size distribution measured by dynamic light scattering.

The inorganic filler (C1) preferably contains a hydrate. In this case, during combustion of a molded material made of the acrylic resin composition, dehydration of hydrate water derived from the hydrate in the molded material causes an endothermic reaction and thus readily produces a cooling action, and moreover, the hydrate water resulting from the dehydration readily dilutes a combustion gas in a gaseous phase during the combustion. This readily further improves the flame retardancy of the molded material made of the acrylic resin composition. Note that the "hydrate" means a compound formed by the union of one or more water molecules.

The inorganic filler (C1) may include at least one type of compound selected from the group consisting of, for example, wollastonite, glass fiber, magnesium hydroxide, calcium hydroxide, and aluminum hydroxide. Note that the specific components of the inorganic filler (C1) are not limited to the examples described above, but the inorganic filler (C1) preferably includes wollastonite, because in this case, the occurrence of dripping during combustion of the molded article can be particularly easily reduced, thereby readily imparting high flame retardancy.

The amount of the inorganic filler (C1) relative to 100 parts by mass of the thermoplastic resin (A) is preferably greater than or equal to 0.1 parts by mass and less than or equal to 15 parts by mass. In this case, further enhanced flame retardancy can be imparted to the molded material of the acrylic resin composition. The amount of the inorganic filler (C1) relative to 100 parts by mass of the thermoplastic resin (A) is more preferably greater than or equal to 1 parts by mass and less than or equal to 13 parts by mass, and much more preferably greater than or equal to 3 parts by mass and less than or equal to 10 parts by mass.

### [Other Components]

The acrylic resin composition of the present embodiment may contain a component, for example, an additive, such as a colorant and a mold release agent, other than the components described above as long as the effect of the present disclosure is not inhibited.

The acrylic resin composition of the present embodiment may be prepared by, for example, the following method.

That is, the acrylic resin composition is obtained by mixing the PMMA resin (A1) and the PC resin (A2), the halogen-based flame retarder (B), the inorganic compound (C), and an appropriate additive(s) with each other. The PMMA resin (A1) and the PC resin (A2) are components which may be included in the thermoplastic resin (A).

The melt mass flow rate (MFR) of the acrylic resin composition preferably has a lower limit of 1 g/10min. In this case, the acrylic resin composition can have high moldability. Thus, to produce the molded material from the acrylic resin composition, the acrylic resin composition is readily molded. The lower limit of the MFR of the acrylic resin composition is more preferably 3 g/10min, and much more preferably greater than or equal to 4 g/10min. The MFR of the acrylic resin composition is measurable by a method which will be described in examples below.

As described above, the acrylic resin composition of the present embodiment can impart high flame retardancy, and can impart high mechanical performance, to the molded material of the acrylic resin composition. Moreover, the acrylic resin composition is excellent in chemical resistance and glossiness. Therefore, the acrylic resin composition of the present embodiment is particularly suitably usable as a resin molding material for places where water is used. For example, examples of use in places where water is used include furniture members, such as lavatory counters, kitchen counters, bathtubs, washbowls, and toilet bowls, and construction materials. These furniture members and construction materials can be made of a molded product obtained by molding the acrylic resin composition as the resin molding material.

Next, the molded article according to the present embodiment will be described.

### (2) Molded Article

The molded article of the present embodiment includes a molded material of the acrylic resin composition described above. That is, the molded article is obtained by molding the acrylic resin composition. A method for producing the molded article is not limited to a particular method, any appropriate molding method may be employed, and examples of this method include various types of molding methods such as injection molding and extrusion molding. The molded article is made of the acrylic resin composition and thus has high flame retardancy and high mechanical performance.

The characteristic of the molded article will specifically be described.

For the molded article, an oxygen index (OI) measured in conformity to JIS K7201-2 preferably has a lower limit of greater than or equal to 24. In this case, the molded article can have excellent flame retardancy. The lower limit of the oxygen index (OI) of the molded article is more preferably greater than or equal to 26.

For the molded article, a bending strength measured in conformity to ASTM D790 preferably has a lower limit of greater than or equal to 100 MPa. In this case, the molded article can have high mechanical strength. The lower limit of the bending strength of the molded article is more preferably greater than 110 MPa.

For the molded article, pencil hardness measured in conformity to ASTM D3365 is preferably greater than or equal to 2H. In this case, the molded article can have high hardness.

### Examples

The present disclosure will be specifically explained below with reference to examples. Note that the present disclosure is not limited to the following examples.

### (1) Preparation of Resin Composition

In each of the examples and comparative examples, components shown in tables are mixed with each other in proportions shown in the tables. Note that the details of the components shown in the tables are as follows. Moreover, in the tables, "Halogen Content Relative to Thermoplastic Resin" is the amount of halogen contained in the halogen-based flame retarder relative to 100 parts by mass of the thermoplastic resin.

### (Thermoplastic Resin)

·PMMA resin: Poly methyl methacrylate resin (manufactured by Mitsubishi Chemical Corporation, item number VH001)
·PC resin: Polycarbonate resin (manufactured by Mitsubishi Engineering-Plastics Corporation, item number S2000)

### (Halogen-based Flame Retarder)

·TBBPA: Tetrabromobisphenol A-type epoxy resin (manufactured by Sakamoto Yakuhin Kogyo Co., Ltd. Halogen content: 52%)
·EBPBP: Ethylene bis(pentabromophenyl) (manufactured by ALBEMARLE JAPAN CORPORATION. Halogen content: 82%)

### (Inorganic Compound)

·Flame retarder auxiliary agent: Diantimony trioxide (manufactured by FUJIFILM Wako Pure Chemical Corporation)
·Inorganic filler 1: Wollastonite (manufactured by TOMOE KOGYO CO., LTD., item number NYGLOS 4W. Fiber length 63 µm, fiber diameter 7 µm. Aspect ratio 9)
·Inorganic filler 2: Wollastonite (manufactured by TOMOE KOGYO CO., LTD., product name NYGLOS 8. Fiber length 156 µm, fiber diameter 12 µm. Aspect ratio 13)
·Inorganic filler 3: Wollastonite (manufactured by TOMOE KOGYO CO., LTD., product name NYAD-G. Fiber length 825 µm, fiber diameter 55 µm. Aspect ratio 15)
·Inorganic filler 4: Magnesium hydroxide (manufactured by Konoshima Chemical CO., LTD., item number S6. Average particle size 1.0 µm.)
·Inorganic filler 5: Magnesium hydroxide (manufactured by Konoshima Chemical Co., Ltd., item number EP50. Average particle size 6.0 µm.)
·Inorganic filler 6: Glass fiber (manufactured by CENTRAL GLASS FIBER CO., LTD., item number EPH150-31. Fiber length 150 µm, Fiber diameter 11 µm.)

### (2) Production of Molded Article

Each resin composition prepared in (1) above was injected into a mold and was molded, thereby producing a molded material, and the molded material thus obtained was defined as a test molded article for an evaluation test.

### (3) Evaluation

### (3-1) Flowability (Measurement of MFR)

For the resin composition of each of the examples and the comparative examples prepared in (1) above, the melt mass flow rate (MFR) was measured. The measurement was performed in conformity to ISO 1133 under conditions with a temperature of 230°C and a weight of 37.3 N. Based on a result obtained by the measurement, an evaluation was performed based on the following criteria.
A: The MFR is greater than 3 g/10min.
B: The MFR is greater than or equal to 1 g/10min and less than or equal to 3 g/10min.
C: The MFR is less than 1 g/10min.

### (3-2) Moldability

### (3-2-1) Exterior Appearance

For the molded article of each of the examples and the comparative examples prepared in (1) above, the exterior appearance of the molded article was checked visually and was evaluated based on the following criteria.
A: No inorganic filler is observed on a surface of the molded article.
B: A few inorganic fillers are observed on the surface of the molded article.
C: A large number of inorganic fillers are apparently observed on the surface of the molded article.

### (3-2-2) Gloss

For the molded article of each of the examples and the comparative examples prepared in (1) above, the degree of gloss was checked visually and was subjected to sensory evaluation based on the following criteria.
A: The mold is well reproduced, and glossiness is observed.
B: The mold is somewhat unsatisfactorily reproduced, but image clarity is observed.
C: The mold is unsatisfactorily reproduced, and no image clarity is observed.

### (3-3) Flame Retardancy

For the test molded article of each of the examples and the comparative examples produced in (2) above, a molded article (test specimen) was cut out in conformity to JIS K7201-2 so that the molded article has a length of 100 mm, a width of 10 mm, and a thickness of 4 mm, the oxygen index (OI value) was measured, and the flame retardancy was evaluated based on the following criteria.
A: The oxygen index is greater than or equal to 26.
B: The oxygen index is greater than or equal to 24 and less than 26.
C: Oxygen index is less than 24, or dripping occurs.

### (3-4) Pencil Hardness (Mechanical Performance)

For the test molded article of each of the examples and the comparative examples produced in (2) above, the pencil hardness was measured in conformity to ASTM D3365. A result thus obtained was evaluated based on the following criteria.
A: The hardness is greater than or equal to 2H.
C: The hardness is less than or equal to H.

### (3-5) Bending Strength (Mechanical Performance)

For the test molded article of each of the examples and the comparative examples produced in (2) above, the bending strength was measured in conformity to ASTM D790 and was evaluated based on the following criteria.
A: The bending strength is greater than 110 MPa.
B: The bending strength is greater than or equal to 100 MPa and less than or equal to 110 MPa.
C: The bending strength is less than 100 MPa.

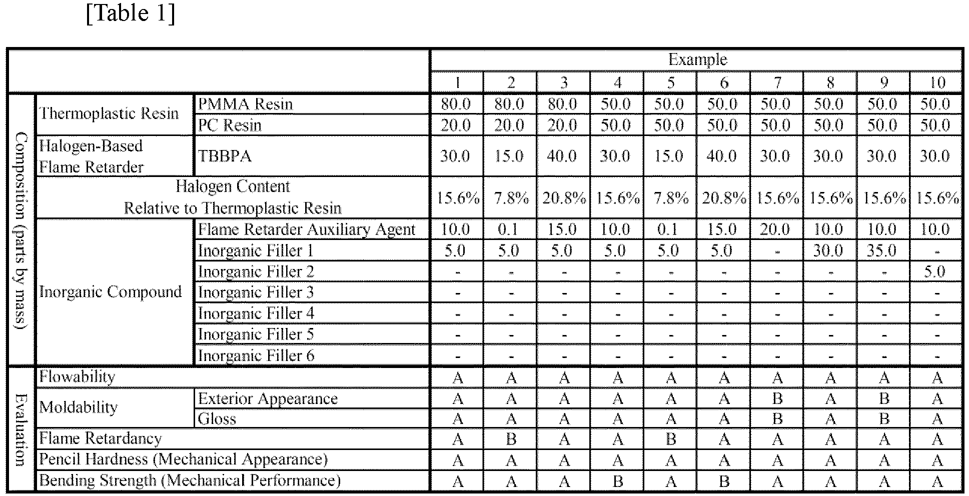

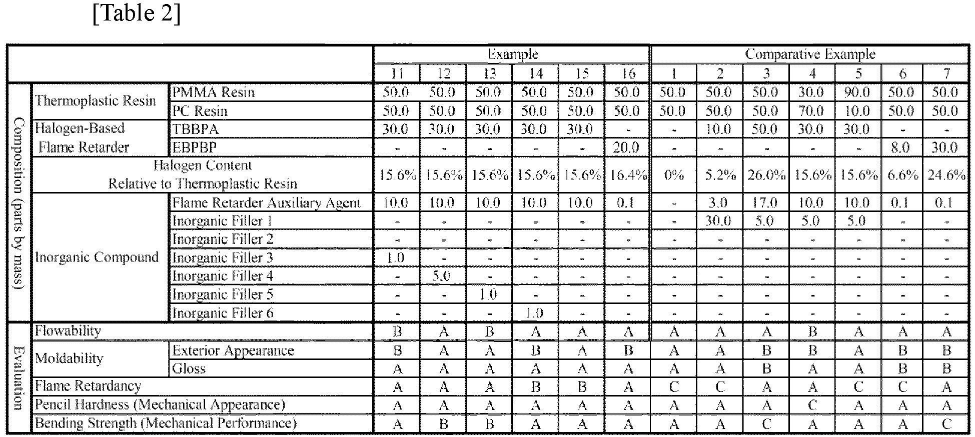

### 3. Summary

As can be seen from the embodiment and the examples described above, the present disclosure includes the following aspects.

An acrylic resin composition of a first aspect contains a thermoplastic resin (A), a halogen-based flame retarder (B), and an inorganic compound (C). The thermoplastic resin (A) includes a polymethyl methacrylate resin (A1) and a polycarbonate resin (A2). A mass proportion of the polycarbonate resin (A2) relative to a total amount of the polymethyl methacrylate resin (A1) and the polycarbonate resin (A2) is greater than or equal to 20% by mass and less than or equal to 50% by mass. An amount of halogen contained in the halogen-based flame retarder (B) relative to 100 parts by mass of the thermoplastic resin (A) is greater than or equal to 7 parts by mass and less than or equal to 21 parts by mass.

The first aspect readily improves the mechanical performance, and enhances the flame retardancy, of a molded material.

In an acrylic resin composition of a second aspect referring to the first aspect, the inorganic compound (C) includes one of, or both, diantimony trioxide and zinc stannate. A total amount of the diantimony trioxide and the zinc stannate relative to 100 parts by mass of the thermoplastic resin (A) is greater than or equal to 0.1 parts by mass and less than or equal to 15 parts by mass.

According to the second aspect, further enhanced flame retardancy can be imparted to the molded material of the acrylic resin composition.

In an acrylic resin composition of a third aspect referring to the first or second aspect, the inorganic compound (C) further includes an inorganic filler (C1) other than the diantimony trioxide and the zinc stannate. The inorganic filler (C1) includes at least one of an inorganic fiber (C11) having a fiber length of greater than or equal to 6 µm and less than or equal to 200 µm and a fiber diameter of greater than or equal to 6 µm and less than or equal to 13 µm or inorganic particles (C12) having an average particle size of greater than or equal to 6 µm and less than or equal to 13 µm.

The third aspect readily improves the flowability of the acrylic resin composition. This readily further improves the moldability during molding of the acrylic resin composition. Moreover, dripping hardly occurs during combustion, and thus, the flame retardancy is readily improved.

In an acrylic resin composition of a fourth aspect referring to the third aspect, the inorganic filler (C1) contains a hydrate.

The fourth aspect readily further improves the flame retardancy of the molded material made of the acrylic resin composition.

In an acrylic resin composition of a fifth aspect referring to the third or fourth aspect, a proportion of the inorganic filler (C1) relative to 100 parts by mass of the thermoplastic resin (A) is greater than or equal to 0.1 parts by mass and less than or equal to 15 parts by mass.

The fifth aspect can impart further enhanced flame retardancy to the molded material of the acrylic resin composition.

A molded article of a sixth aspect includes a molded material of the acrylic resin composition of any one of the first to fifth aspects.

The sixth aspect enables the molded article to be excellent in mechanical performance and flame retardancy and to be particularly suitably used as a resin molded product for places where water is used.

## Claims

1. An acrylic resin composition comprising:
a thermoplastic resin (A);
a halogen-based flame retarder (B); and
an inorganic compound (C),
the thermoplastic resin (A) including
a polymethyl methacrylate resin (A1) and
a polycarbonate resin (A2),
a mass proportion of the polycarbonate resin (A2) relative to a total amount of the polymethyl methacrylate resin (A1) and the polycarbonate resin (A2) being greater than or equal to 20% by mass and less than or equal to 50% by mass,
an amount of halogen contained in the halogen-based flame retarder (B) relative to 100 parts by mass of the thermoplastic resin (A) being greater than or equal to 7 parts by mass and less than or equal to 21 parts by mass.

2. An acrylic resin composition of claim 1, wherein
the inorganic compound (C) includes one of, or both, diantimony trioxide and zinc stannate, and
a total amount of the diantimony trioxide and the zinc stannate relative to 100 parts by mass of the thermoplastic resin (A) is greater than or equal to 0.1 parts by mass and less than or equal to 15 parts by mass.

3. An acrylic resin composition of claim 1 or 2, wherein
the inorganic compound (C) further includes an inorganic filler (C1) other than the diantimony trioxide and the zinc stannate, and
the inorganic filler (C1) includes at least one of an inorganic fiber (C11) having a fiber length of greater than or equal to 6 µm and less than or equal to 200 µm and a fiber diameter of greater than or equal to 6 µm and less than or equal to 13 µm or inorganic particles (C12) having an average particle size of greater than or equal to 6 µm and less than or equal to 13 µm.

4. The acrylic resin composition of claim 3 wherein,
the inorganic filler (C1) contains a hydrate.

5. The acrylic resin composition of claim 3 or 4, wherein
a proportion of the inorganic filler (C1) relative to 100 parts by mass of the thermoplastic resin (A) is greater than or equal to 0.1 parts by mass and less than or equal to 15 parts by mass.

6. A molded article comprising a molded material of the acrylic resin composition of any one of claims 1 to 5.
